# EUROPEAN PATENT APPLICATION

(11) **EP 4 357 920 A1**
(43) Date of publication of application: **24.04.2024**
(21) Application number: 21949564.5
(22) Date of filing: 12.07.2021
(51) Int. Cl.: G06F 9/50

(54) **TASK SCHEDULING METHOD AND APPARATUS**

(71) Applicant: Huawei Technologies Co., Ltd., Longgang Shenzhen, Guangdong 518129 (CN)
(72) Inventor: ZHU, Xiangyi, Shenzhen, Guangdong 518129 (CN)
(74) Representative: Pfenning, Meinig & Partner mbB
(86) International application number: PCT/CN2021/105779
(87) International publication number: WO 2023/283767

(57) **Abstract**

This application discloses a task scheduling method and apparatus. An accelerator receives a plurality of first task streams, where priority types of the plurality of first task streams are a first priority, and the first priority includes a first sub-priority and a second sub-priority; allocates a time slice to each first task stream based on a sub-priority of each first task stream in the plurality of first task streams, where the first sub-priority is higher than the second sub-priority, and a time slice allocated to a first task stream corresponding to the first sub-priority is greater than a time slice allocated to a first task stream corresponding to the second sub-priority; and schedules AI tasks of all first task streams in the plurality of first task streams through round robin. In this way, first task streams with different sub-priorities may occupy the accelerator in turn, and a first task stream with a higher sub-priority occupies more running time of the accelerator, so that scheduling requirements of different AI tasks are met, and computing resource utilization of the accelerator is improved.

## Description

### TECHNICAL FIELD

This application relates to the field of artificial intelligence (Artificial Intelligence, AI), and in particular, to a task scheduling method and apparatus.

### BACKGROUND

With the development of computer network technologies, a neural network model needs to be constructed in more application scenarios. For example, in an autonomous driving system, an AI model needs to be used for inference in many scenarios. The AI model is essentially a deep neural network model. The neural network model has a feature of intensive matrix and vector computation, and has a high requirement on a system computing capability. A common central processing unit (Central Processing Unit, CPU) usually cannot meet a computing power requirement of the neural network model. Therefore, a dedicated accelerator, like a graphics processing unit (Graphics Processing Unit, GPU) or a specially customized embedded neural network processing unit (Neural network Processing Unit, NPU), is required to perform inference acceleration. Generally, due to an interface restriction, an application (Application, APP) side needs to split an AI model into task streams and deliver the task streams to an accelerator. Each task stream includes one or more AI tasks.

Once the accelerator is selected, a computing capability of the accelerator is determined. Scheduling requirements of different AI tasks may be different. For example, in an autonomous driving scenario, AI tasks related to functions such as obstacle detection and lane line detection require highly real-time scheduling, and AI tasks related to functions such as in-vehicle passenger monitoring and entertainment usually do not require highly real-time scheduling.

How to meet scheduling requirements of different AI tasks and improve utilization of an accelerator computing resource is a technical problem to be urgently resolved.

### SUMMARY

This application provides a task scheduling method and apparatus, to meet scheduling requirements of different AI tasks and improve utilization of an accelerator computing resource.

According to a first aspect, a task scheduling method is provided. The method may be applied to any device, chip, integrated circuit, or the like that has a computing capability. For example, the method is applied to an accelerator. The method includes: The accelerator receives a plurality of first task streams, where priority types of the plurality of first task streams are a first priority, and the first priority includes a first sub-priority and a second sub-priority; allocates a time slice to each first task stream based on a sub-priority of each first task stream in the plurality of first task streams, where the first sub-priority is higher than the second sub-priority, and a time slice allocated to a first task stream corresponding to the first sub-priority is greater than a time slice allocated to a first task stream corresponding to the second sub-priority; and schedules artificial intelligence AI tasks of all first task streams in the plurality of first task streams through round robin.

Different first task streams in the plurality of first task streams corresponding to the first priority may have different sub-priorities, and the accelerator schedules each first task stream in the plurality of first task streams through round robin. Therefore, first task streams with different sub-priorities can occupy the accelerator in turn. Because a processing speed of the accelerator is high, it can be superficially considered that first task streams with different sub-priorities are scheduled in parallel, provided that an interval between time slices is appropriate. This achieves technical effect of parallel scheduling of task streams with different sub-priorities in the first priority. In addition, because a longer time slice is allocated to a task stream with a higher sub-priority, it can be further ensured that the task stream with the higher sub-priority occupies more running time of the accelerator, thereby implementing priority-based control. In addition, this scheduling mechanism is simple, has a small computation amount, and is applicable to hardware-based implementation, for example, is applicable to an accelerator like an NPU or a GPU.

It should be understood that in this specification, the first priority includes the first sub-priority and the second sub-priority. In actual application, more priorities may be included. This is not limited in this application.

In a possible implementation, when the AI tasks of all the first task streams in the plurality of first task streams are scheduled through round robin, the AI tasks may be scheduled starting from a first task stream with a high sub-priority. For example, the first sub-priority is the highest. An AI task of the first task stream with the first sub-priority is first scheduled; and then an AI task of the first task stream with the second sub-priority is scheduled when a time slice that has been used for the first task stream with the first sub-priority is greater than or equal to the time slice allocated to the first task stream with the first sub-priority or when the AI task of the first task stream with the first sub-priority is completely scheduled. If there is a sub-priority, for example, a third sub-priority, lower than the second sub-priority, an AI task of a first task stream with the third sub-priority continues to be scheduled when a time slice that has been used for the first task stream with the second sub-priority is greater than or equal to the time slice allocated to the first task stream with the second sub-priority or when the AI task of the first task stream with the second sub-priority is completely scheduled.

In this way, when task streams corresponding to all sub-priorities in the first priority are scheduled in parallel, it can be ensured as much as possible that a task stream with a higher sub-priority is first scheduled.

In an embodiment of this application, one AI task may be scheduled to one arithmetic logic unit of the accelerator for processing, or may be scheduled to a plurality of arithmetic logic units for processing. This is not limited in this application.

In a possible implementation, each AI task may carry one piece of indication information, used to indicate a specific quantity of arithmetic logic units to which the AI task may need to be scheduled for processing. For example, a quantity N of data blocks corresponding to a first AI task is determined based on first indication information carried by the first AI task in the first task stream, where N is a positive integer; and if N=1, the first AI task is scheduled to one arithmetic logic unit for processing; or if N>1, the first AI task is divided into N data blocks, and the N data blocks obtained through division are scheduled to N different arithmetic logic units for processing.

In this way, a single AI task can be scheduled to a plurality of arithmetic logic units for running, thereby improving a parallelism degree of AI task scheduling.

In an embodiment of this application, after completing one round of scheduling, the accelerator may further reallocate a time slice.

In a possible implementation, when an AI task of at least one first-type task stream in the plurality of first task streams is not completely scheduled, and a time slice that has been used for each first task stream in the at least one first-type task stream is greater than or equal to a time slice allocated to the first task stream, a time slice is reallocated to each first task stream in the at least one first-type task stream based on a sub-priority of each first task stream in the at least one first-type task stream, where if in the at least one first-type task stream a time slice that has been used for any first task stream in a previous round of scheduling exceeds a time slice allocated to the any first task stream, the excess of the time slice that has been used for the any first task stream in the previous round of scheduling is deducted from a time slice reallocated to the any first task stream.

In this way, it can be ensured that a proportion of a total time slice actually used for each first task stream in a plurality of rounds of scheduling matches a sub-priority, and accuracy of priority-based control can be further improved.

In a possible implementation, if the accelerator simultaneously receives task streams with a plurality of priorities, the accelerator may preferentially schedule a task stream with a higher priority. For example, several task streams are received, the several task streams include the plurality of first task streams and at least one second task stream, a priority type of the at least one second task stream is a second priority, and the second priority is higher than the first priority. In this case, before the AI tasks of all the first task streams in the plurality of first task streams are scheduled through round robin, an AI task in the at least one second task stream is scheduled; and after all AI tasks in the at least one second task stream are completely scheduled, the AI tasks of all the first task streams in the plurality of first task streams are scheduled through round robin.

In this way, a task stream with a higher priority can be scheduled by the accelerator prior to a task stream with a lower priority, so that real-time scheduling of the task stream with the higher priority can be better ensured.

In a possible implementation, a task stream with a higher priority may preempt time for which a task stream with a lower priority occupies an arithmetic logic unit of the accelerator. For example, in a process of scheduling the AI tasks of all the first task streams in the plurality of first task streams through round robin, if at least one second task stream is received when a second AI task in the plurality of first task streams is scheduled, after the second AI task is completely executed or after a data block that is in the second AI task and that has been scheduled to an arithmetic logic unit is completely executed, scheduling of the AI tasks in the plurality of first task streams is suspended, and an AI task in the at least one second task stream starts to be scheduled, where a priority type of the at least one second task stream is a second priority, and the second priority is higher than the first priority.

In this way, a task stream with a higher priority may preempt time for which a task stream with a lower priority occupies an arithmetic logic unit of the accelerator, so that real-time scheduling of the task stream with the higher priority can be better ensured.

An embodiment of this application may be applied to any scenario in which inference needs to be performed on an AI model.

In a possible implementation, an embodiment of this application is applied to an autonomous driving scenario. For example, the first task stream is a task stream in a first AI inference model, and the first AI inference model corresponds to an in-vehicle passenger monitoring function or an entertainment function in an autonomous driving system; and the second task stream is a task stream in a second AI inference model, and the second AI inference model corresponds to an obstacle detection function, a lane line detection function, or a driver detection function in the autonomous driving system.

In this way, real-time requirements of different functions in the autonomous driving system can be ensured, intelligence of autonomous driving can be improved, and user experience can be improved.

According to a second aspect, a task scheduling apparatus is provided. The apparatus includes a module/unit configured to perform the method according to any one of the first aspect or the possible implementations of the first aspect.

For example, the apparatus may include a transceiver module, configured to receive a plurality of first task streams, where priority types of the plurality of first task streams are a first priority, and the first priority includes a first sub-priority and a second sub-priority; and a processing module, configured to: allocate a time slice to each first task stream based on a sub-priority of each first task stream in the plurality of first task streams, where the first sub-priority is higher than the second sub-priority, and a time slice allocated to a first task stream corresponding to the first sub-priority is greater than a time slice allocated to a first task stream corresponding to the second sub-priority; and schedule AI tasks of all first task streams in the plurality of first task streams through round robin.

For a specific implementation in which the foregoing modules perform corresponding functions, refer to a corresponding implementation in the first aspect. Details are not described herein again.

According to a third aspect, an accelerator is provided, including a programmable logic circuit and/or program instructions. When the accelerator runs, the accelerator is configured to implement the method according to any one of the first aspect or the possible implementations of the first aspect.

According to a fourth aspect, a computer-readable storage medium is provided. The readable storage medium is configured to store instructions, and when the instructions are executed, the method according to any one of the first aspect or the possible implementations of the first aspect is implemented.

According to a fifth aspect, a computer program product including instructions is provided. When the computer program product runs on a computer, the computer is enabled to perform the method according to any one of the first aspect or the possible implementations of the first aspect.

For beneficial effects of the second aspect to the fifth aspect, refer to technical effects that can be achieved in corresponding implementations of the first aspect. Details are not described herein again.

### BRIEF DESCRIPTION OF DRAWINGS

FIG. 1 is a schematic diagram of an application scenario to which an embodiment of this application is applicable;
FIG. 2 is a schematic diagram of a structure of a computing device according to an embodiment of this application;
FIG. 3 is a flowchart of a task scheduling method according to an embodiment of this application;
FIG. 4 is a schematic diagram of a relationship between an AI task and a block;
FIG. 5 shows a specific example of a task scheduling method according to this application; and
FIG. 6 is a schematic diagram of a structure of a task scheduling apparatus according to an embodiment of this application.

### DESCRIPTION OF EMBODIMENTS

A task scheduling method provided in embodiments of this application is applicable to any scenario in which inference needs to be performed on an AI model, for example, including but not limited to the following scenarios: intelligent control (such as autonomous driving and assisted driving), machine vision, fingerprint recognition, facial recognition, retina recognition, iris recognition, palmprint recognition, automatic planning, intelligent search, theorem proving, game, automatic program design, robotics, language and image understanding, and genetic programming.

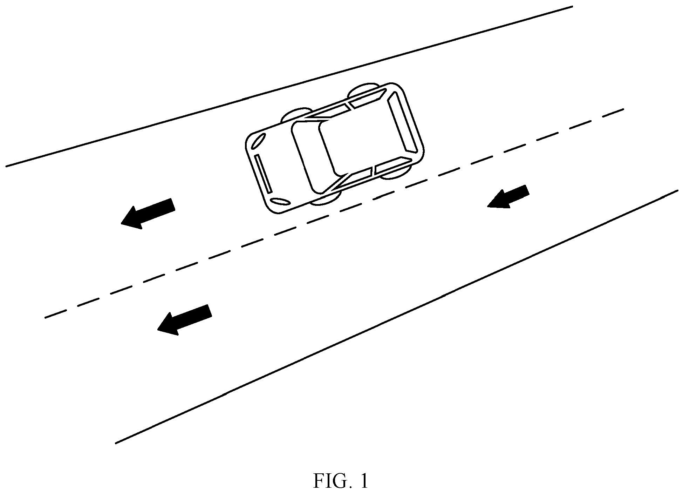

For example, FIG. 1 is a schematic diagram of an application scenario to which an embodiment of this application is applicable. In an autonomous driving scenario, AI model inference is required when a vehicle implements a related function like obstacle detection, lane line detection, driver monitoring, or entertainment. For example, the vehicle may capture an image of a lane, input the captured image into an AI model corresponding to a lane line detection function, and output a lane line detection result by using the AI model corresponding to the lane line detection function. For another example, the vehicle may collect a voice signal sent by a driver, input the voice signal into an AI model corresponding to a driver monitoring function, and output a voice recognition result by using the AI model corresponding to the driver monitoring function.

Further, the task scheduling method provided in embodiments of this application may be performed by a computing device. The computing device may be disposed in a cloud data center to respond to a requirement of a user, or may be disposed in a front-end intelligent device to respond to a requirement of a user. This is not limited in this application. Using the autonomous driving scenario shown in FIG. 1 as an example, the computing device may be deployed in a vehicle (for example, may be an in-vehicle computer), or may be deployed in a cloud server of the vehicle.

It should be understood that the computing device in embodiments of this application may be any device, chip, integrated circuit, or the like that has a computing capability. For example, the computing device includes but is not limited to one or more of a general-purpose central processing unit (central processing unit, CPU), a graphics processing unit (graphics processing unit, GPU), a neural network processing unit (neural network process unit, NPU), a field programmable gate array (field programmable gate array, FPGA), and the like.

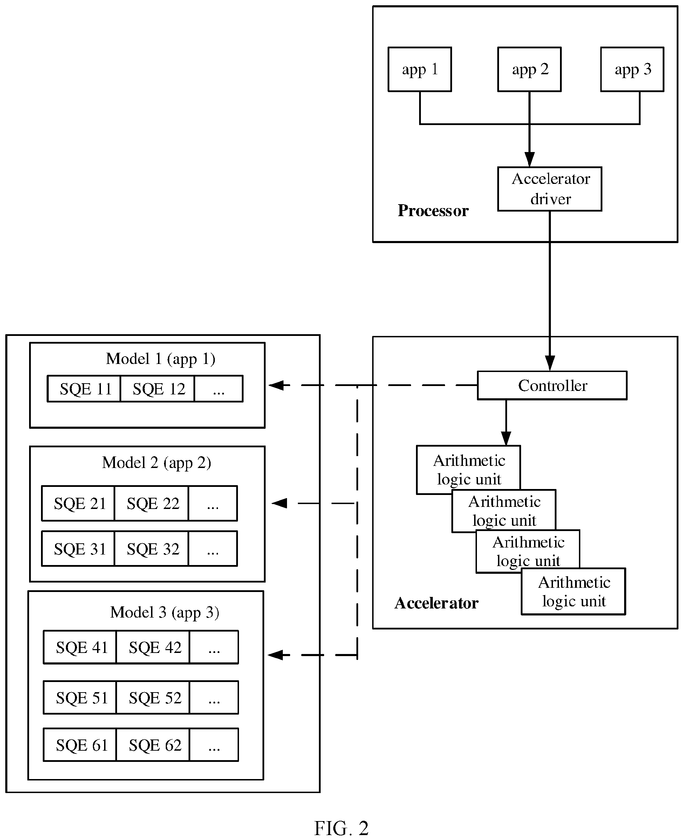

For example, FIG. 2 is a schematic diagram of a structure of a possible computing device. The computing device includes a processor and an accelerator.

The processor (for example, a CPU) is usually an ultra-large-scale integrated circuit, and is a computing core (Core) and a control core (Control Unit) of a computer. A main function of the processor is to interpret computer instructions and process data in computer software. The CPU is a core component in the computer that is responsible for reading, decoding, and executing instructions. The central processing unit mainly includes two parts, that is, a controller and an arithmetic unit, and further includes a cache and data and control buses for implementing a relationship thereof. In a computer architecture, the CPU is a core hardware unit that controls and schedules all hardware resources (such as a memory and an input/output unit) of the computer and performs a general-purpose operation. The CPU is a computing and control core of the computer. All operations at a software layer in a computer system are finally mapped to CPU operations by using an instruction set.

The CPU may function independently to process complex logical operations and different data types. However, when a large amount of data of a unified type (for example, a neural network model with intensive matrix and vector computation) needs to be processed, computing power of the CPU cannot meet a requirement.

The accelerator may be configured to process a large amount of data of a unified processing type (for example, a neural network model with intensive matrix and vector computation). The accelerator can be used as an auxiliary processor of the CPU to share some work of the CPU, so as to improve a speed of obtaining a data processing result by the CPU. Examples of common accelerators include an NPU and a GPU.

The GPU, also referred to as a display core, a visual processor, or a display chip, is a microprocessor that specially performs image and graphics-related computing on a personal computer, a workstation, a game console, and some mobile devices (such as a tablet computer and a smartphone). The GPU reduces dependency of a graphics card on the CPU, and performs a part of original CPU work. Especially, core technologies used by the GPU during 3D graphics processing include hardware T&L (geometric conversion and illumination processing), cube environment material mapping and vertex mixing, texture compression and bump mapping, and a dual-texture 4-pixel 256-bit rendering engine. The hardware T&L technology may be considered as a representation of the GPU.

The NPU uses a "data-driven parallel computing" architecture, and is particularly good at processing massive multimedia data such as video and image data. The NPU is specially designed for internet of things artificial intelligence to accelerate neural network computing and resolve a problem of low efficiency of a conventional chip during neural network computing. The NPU can autonomously process some data, and share received diversified data with another unit for processing.

One or more applications (Application, APP) run on the processor. It should be understood that FIG. 2 shows three apps: an app 1, an app 2, and an app 3. However, this is not limited in practice.

Generally, one app may correspond to one or more AI models, and one AI model may correspond to one or more apps. After an app completes initialization, the app in the processor may invoke a driver (for example, an NPU driver) of the accelerator to drive the accelerator to run, and deliver (or load) an AI model to the accelerator.

It should be understood that the AI model on an app side is usually a calculation chart structure. Therefore, the app needs to convert the calculation chart structure into an execution sequence structure that can be executed by the accelerator, and then deliver the AI model to the accelerator in a form of one or more execution sequences. One AI model may correspond to one or more execution sequences, and each execution sequence may include a plurality of execution units. In this specification, the execution unit may also be referred to as an execution task or an AI task (task). Each execution sequence may include a plurality of AI tasks, and AI tasks in a same execution sequence are executed in series on the accelerator. Therefore, the execution sequence may also be referred to as a task stream. For example, each SQE shown in FIG. 2 is one AI task (that is, one execution unit). It should be understood that, in FIG. 2, only an example in which an AI model 1 corresponding to an app 1 has two task streams, an AI model 2 corresponding to an app 2 has one task stream, and an AI model 3 corresponding to an app 3 has three task streams is used. However, this is not limited in practice.

During specific implementation, when loading the AI model to the accelerator, the app may load all task streams (or all AI tasks) to the accelerator for execution at a time, or may load the AI model a plurality of times and load only some task streams (or some AI tasks) of the AI model to the accelerator for execution each time. In either manner, it is learned on an accelerator side that an AI task in a task stream needs to be executed (or an execution unit in an execution sequence needs to be executed).

The accelerator may include a controller and an arithmetic logic unit. The controller is configured to: receive an AI task delivered by the processor (or receive a task stream delivered by the processor), and allocate the AI task delivered by the processor to the arithmetic logic unit for execution. A process in which the controller allocates the AI task to the arithmetic logic unit may also be referred to as a process in which the controller schedules the AI task to the arithmetic logic unit. The arithmetic logic unit is configured to: execute (or run) the AI task scheduled by the controller, and report an execution result (or a running result or a computing result) to the controller. The controller is further configured to report the computing result of the AI model to the processor. It should be understood that when the AI model is executed, the app of the processor can obtain a complete computing result only after all AI tasks of the AI model are completely executed.

During specific implementation, one processor may correspond to one accelerator, or may correspond to a plurality of accelerators. This is not limited in this application.

During specific implementation, the processor and the accelerator may be separately implemented by using separate chips, or may be integrated into one chip for implementation. This is not limited in this application.

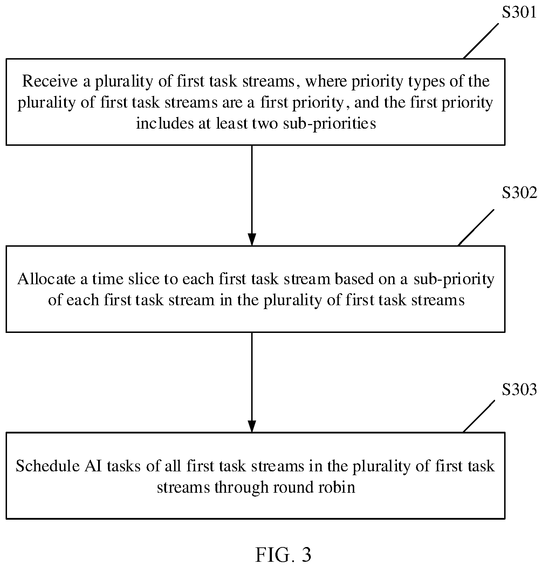

FIG. 3 is a flowchart of a task scheduling method according to an embodiment of this application. For example, the method is applied to the computing device shown in FIG. 2. The method includes the following steps.

S301: An accelerator receives a plurality of first task streams, where priority types of the plurality of first task streams are a first priority, and the first priority includes at least two sub-priorities.

Specifically, a controller of the accelerator may receive the plurality of first task streams from a processor, and each first task stream includes a plurality of AI tasks. The plurality of first task streams may correspond to a same AI model. FIG. 2 is used as an example. An app 3 in the processor may deliver a task stream of a model 3 corresponding to the app 3 to the controller of the accelerator. The model 3 includes three task streams: {SQE41, SQE42, ...}, {SQE51, SQE52, ...}, and {SQE61, SQE62, ...}. The plurality of first task streams may alternatively correspond to a plurality of different AI models. FIG. 2 is used as an example. An app 1 in the processor may deliver a task stream of a model 1 corresponding to the app 1 and a task stream of a model 2 corresponding to an app 2 to the controller of the accelerator. The model 1 includes one task stream: {SQE11, SQE12, ...}, and the model 2 includes two task streams: {SQE21, SQE22, ...} and {SQE31, SQE32, ...}. It should be understood that an AI task in each first task stream is a to- be-scheduled AI task. During scheduling, the AI task in each first task stream is scheduled in a serial form.

In this embodiment of this application, a priority of a task stream may be used to represent a real-time requirement of the task stream for scheduling, or may be used to represent a real-time requirement of the task stream for outputting a computing result (which is a computing result of the entire task stream). A higher real-time requirement of the task stream for scheduling indicates a higher priority corresponding to the task stream, or a lower real-time requirement of the task stream for scheduling indicates a higher priority corresponding to the task stream. This is not limited in this application. In addition, a quantity of priority types may be set based on an actual requirement. This is not limited in this application.

For ease of description, the following mainly uses an example in which a higher real-time requirement of the task stream for scheduling indicates a higher priority corresponding to the task stream.

For example, in the autonomous driving scenario shown in FIG. 1, for a task stream related to a function like obstacle detection or lane line detection, a detection task needs to be completed within an expected time period to obtain a detection result. Therefore, a real-time requirement for scheduling is high (for example, it is required that a time period from receiving the task stream by the accelerator to outputting a computing result of the task stream by the accelerator does not exceed a first time threshold, or a time period for executing the task stream by the accelerator does not exceed a first time threshold), and an AI task in the task stream needs to be scheduled with a highest priority.

For example, in the autonomous driving scenario shown in FIG. 1, a task stream related to a function like driver monitoring (for example, driver fatigue detection or distraction detection) has a low real-time requirement for scheduling (for example, it is required that a time period from receiving the task stream by the accelerator to outputting a computing result of the task stream by the accelerator exceeds a first time threshold but does not exceed a second time threshold, or a time period for executing the task stream by the accelerator exceeds a first time threshold but does not exceed a second time threshold, where the second time threshold is greater than the first time threshold), and an AI task in the task stream may be scheduled with a relatively high priority.

For example, in the autonomous driving scenario shown in FIG. 1, a task stream related to a function like in-vehicle passenger monitoring or entertainment has no real-time requirement (for example, it is required that a time period from receiving the task stream by the accelerator to outputting a computing result of the task stream by the accelerator exceeds a second time threshold, or a time period for executing the task stream by the accelerator exceeds a second time threshold), and an AI task may be scheduled with a relatively low priority.

Certainly, the foregoing is merely an example rather than a limitation. During specific implementation, a priority corresponding to a task stream related to each function may be set according to a user requirement.

In this embodiment of this application, the first priority is a priority corresponding to a first task stream that has no real-time requirement (or has a low real-time requirement or a general real-time requirement or a relatively low real-time requirement) for scheduling, or a priority corresponding to a task stream that has a low real-time requirement (or has a general real-time requirement or a relatively low real-time requirement) for outputting a computing result (which is a computing result of the entire first task stream).

In a possible implementation, the first task stream corresponding to the first priority does not require that a time period from receiving the first task stream by the accelerator to outputting a computing result by the accelerator meets a first preset time range, or the first task stream corresponding to the first priority does not require that a time period for executing the first task stream by the accelerator meets a first preset time range, or the first task stream corresponding to the first priority requires that a time period from receiving the first task stream by the accelerator to outputting a computing result by the accelerator meets a second preset time range, or the first task stream corresponding to the first priority requires that a time period for executing the first task stream by the accelerator meets a second preset time range.

For example, in the autonomous driving scenario shown in FIG. 1, the first task stream corresponding to the first priority may be a task stream related to a function like in-vehicle passenger monitoring or entertainment. This type of task stream does not require real-time scheduling. Specifically, for example, a time period from receiving this type of task stream by the accelerator to outputting a computing result of this type of task stream by the accelerator is not required to be less than the second time threshold, or a time period for executing this type of task stream by the accelerator is not required to be less than the second time threshold, or a time period from receiving this type of task stream by the accelerator to outputting a computing result of this type of task stream by the accelerator may exceed the second time threshold, or a time period for executing this type of task stream by the accelerator may exceed the second time threshold.

It should be understood that this is merely an example rather than a specific limitation. In actual application, the function corresponding to the task stream with the first priority may alternatively be another function.

It should be noted that, in this embodiment of this application, a task stream delivered by the processor to the accelerator includes at least a task stream with the first priority (that is, the plurality of first task streams), and may further include a task stream with another priority. This is not limited.

For example, in addition to the first task stream with the first priority, the task stream delivered by the processor to the accelerator may further include a second task stream with a second priority, where the second priority is higher than the first priority. The second priority may be a priority corresponding to a second task stream that has a specific real-time requirement (or has a relatively high real-time requirement or a high real-time requirement) for scheduling, or a priority corresponding to a task stream that has a specific real-time requirement (or has a relatively high real-time requirement or a high real-time requirement) for outputting a computing result (which is a computing result of the entire second task stream). The second task stream is, for example, a task stream related to a driver monitoring function. In conclusion, the second priority has a higher real-time requirement for scheduling than the first priority.

For example, in the autonomous driving scenario shown in FIG. 1, the first task stream corresponding to the first priority may be a task stream related to an in-vehicle passenger monitoring or entertainment function, and a priority of a task stream related to another function that has a higher real-time requirement than the in-vehicle passenger monitoring or entertainment function, for example, a driver monitoring function, an obstacle detection function, or a lane line detection function, corresponds to the second priority.

It should be noted that the foregoing correspondence between a task stream and a priority is also an example rather than a limitation. In actual application, the correspondence may be reset based on an actual requirement. This is not limited in this application.

It should be further noted that, the foregoing uses an example in which priorities include the first priority and the second priority. However, in actual application, a quantity of priorities may be flexibly set according to a requirement. For example, the quantity of priorities may be greater than 2. For example, in addition to the first priority, the priorities may further include the second priority and a third priority, where the third priority is higher than the second priority, and the second priority is higher than the first priority (first priority < second priority < third priority). The second priority is a priority corresponding to a second task stream that has a specific real-time requirement (or has a relatively high real-time requirement or a high real-time requirement) for scheduling, or a priority corresponding to a task stream that has a specific real-time requirement (or has a relatively high real-time requirement or a high real-time requirement) for outputting a computing result (which is a computing result of the entire second task stream). The second task stream is, for example, a task stream related to a driver monitoring function. The third priority is a priority corresponding to a third task stream that has a very high real-time requirement (or has a highest real-time requirement) for scheduling, or a priority corresponding to a task stream that has a very high real-time requirement (or has a highest real-time requirement) for outputting a computing result (which is a computing result of the entire third task stream). The third task stream is, for example, a task stream related to a function like obstacle detection or lane line detection.

For ease of description, an example in which the priorities include the first priority and the second priority is mainly used in this specification. In this embodiment of this application, any priority may be further divided into a plurality of sub-priorities, and sub-priorities in each priority are used to more precisely represent different requirements of different task streams with the priority for real-time scheduling. For example, the first priority may include at least two sub-priorities, and sub-priorities of first task streams are used to more precisely represent real-time requirements of different first task streams for scheduling. For example, a first task stream having a higher real-time requirement for scheduling corresponds to a higher sub-priority, or a first task stream having a higher real-time requirement for scheduling corresponds to a lower sub-priority. This is not limited in this application.

For ease of description, the following mainly uses an example in which a higher real-time requirement of the task stream for scheduling indicates a higher sub-priority corresponding to the task stream.

For example, in the autonomous driving scenario shown in FIG. 1, a task stream corresponding to the first priority is a task stream related to a function like in-vehicle passenger monitoring or entertainment. A task stream related to the in-vehicle passenger monitoring function has a first sub-priority, a task stream related to the entertainment function has a second sub-priority, and the second sub-priority is higher than the first sub-priority. It should be understood that this is merely an example rather than a limitation.

In addition, in this embodiment of this application, the AI model may also have a priority. The priority of the AI model is used to represent a requirement of the AI model for real-time scheduling, or is used to represent a real-time requirement of the AI model for outputting a computing result (which is a computing result of the entire AI model).

It should be understood that a priority of a task stream corresponding to the AI model should match the priority of the AI model. A matching case includes but is not limited to the following two cases.

Case 1: The priority of the task stream corresponding to the AI model is consistent with the priority of the AI model. For example, a priority of a model I is the first sub-priority in the first priority, and all task streams corresponding to the model I have the first sub-priority in the first priority.

Case 2: The priority of the AI model includes the priority of the task stream corresponding to the AI model. For example, a priority of a model IIis the first priority, the model II corresponds to two task streams, one task stream has the first sub-priority in the first priority, and the other task stream has the second sub-priority in the first priority.

If the accelerator detects that a priority of an AI model does not match a priority of a task stream corresponding to the AI model, the accelerator may overwrite the priority of the task stream by using the priority of the AI model, so that the priority of the task stream matches the priority of the AI model.

For example, a priority of a model III is the first priority (the first priority includes a first sub-priority and a second sub-priority), the model III corresponds to three task streams, a priority of the 1^{st} task stream is the first sub-priority in the first priority, a priority of the 2^{nd} task stream is the second sub-priority in the first priority, and a priority of the 3^{rd} task stream is a first sub-priority in the second priority. It can be learned that the priority of the 3^{rd} task stream (that is, the first sub-priority in the second priority) does not match the priority of the model III (that is, the first priority). Therefore, the priority of the 3^{rd} task stream is overwritten by using the priority of the model III, and a priority of the 3^{rd} task stream after the overwriting is any sub-priority in the first priority (for example, the first sub-priority in the first priority or the second sub-priority in the first priority).

S302: The accelerator allocates a time slice to each first task stream based on a sub-priority of each first task stream in the plurality of first task streams.

The time slice allocated to the first task stream may be specifically a time segment allocated by the controller of the accelerator to the first task stream for occupying an arithmetic logic unit, or a longest time period for which the first task stream is allowed to be scheduled. The controller of the accelerator schedules, in the time slice corresponding to each first task stream, an AI task of the first task stream to the arithmetic logic unit, and the arithmetic logic unit runs the scheduled AI task to output a computing result corresponding to the scheduled AI task.

If a higher sub-priority of the first task stream indicates a higher real-time requirement for scheduling, a longer time slice is allocated to the first task stream with the higher sub-priority; or if a lower sub-priority of the first task stream indicates a higher real-time requirement for scheduling, a longer time slice is allocated to the first task stream with the lower sub-priority. A correspondence between a priority and a time slice is not specifically limited in this application.

For ease of description, the following mainly uses an example in which a higher sub-priority of the first task stream indicates a higher real-time requirement for scheduling, and a longer allocated time slice.

5303 : The accelerator schedules AI tasks of all first task streams in the plurality of first task streams through round robin.

It should be understood that, in this specification, scheduling is a process in which the controller of the accelerator allocates an AI task to the arithmetic logic unit of the accelerator. The arithmetic logic unit runs (or computes or processes) the AI task that is allocated to the arithmetic logic unit, and may output an operation result (or a computing result or a processing result) corresponding to the AI task. Scheduling an AI task in a task stream may also be described as scheduling the task stream. For example, "scheduling the AI tasks of all the first task streams in the plurality of first task streams" may also be described as "scheduling all the first task streams in the plurality of first task streams".

Round robin means that a plurality of task streams occupy the arithmetic logic unit in turn for running, and a time period of occupying the arithmetic logic unit by each task stream is determined by a time slice allocated to the task stream.

Correspondingly, that the accelerator schedules the AI tasks of all the first task streams in the plurality of first task streams through round robin includes: The controller of the accelerator schedules, based on a time slice (that is, an allocated time slice) corresponding to each first task stream in the plurality of first task streams, an AI task in each first task stream to the arithmetic logic unit in turn for running, where a time period of occupying the arithmetic logic unit by each first task stream is determined by the time slice allocated to the first task stream.

The following uses two examples for description.

Example 1: In an example in which the first priority includes two sub-priorities (a first sub-priority and a second sub-priority), the accelerator first schedules an AI task of a first task stream with the first sub-priority in the plurality of first task streams; and when a time slice allocated to the first task stream with the first sub-priority is used up, or the AI task of the first task stream with the first sub-priority is completely scheduled, schedules an AI task of a first task stream with the second sub-priority. When a time slice allocated to the first task stream with the second sub-priority is used up, or the AI task of the first task stream with the second sub-priority is completely scheduled, one round of scheduling is completed. During specific implementation, the foregoing scheduling may alternatively be re-sequenced. To be specific, the accelerator first schedules an AI task of a first task stream with the second sub-priority in the plurality of first task streams; and when a time slice allocated to the first task stream with the second sub-priority is used up, or the AI task of the first task stream with the second sub-priority is completely scheduled, schedules an AI task of a first task stream with the first sub-priority. When a time slice allocated to the first task stream with the first sub-priority is used up, or the AI task of the first task stream with the first sub-priority is completely scheduled, one round of scheduling is completed.

It should be noted that, that a time slice allocated to a task stream is "used up" in an embodiment of this application means that a time slice actually used for the task stream is greater than or equal to the time slice allocated to the task stream. For example, that the time slice allocated to the first task stream with the first sub-priority is used up means that a time slice actually used for the first task stream with the first sub-priority is greater than or equal to the time slice allocated to the first task stream with the first sub-priority. In addition, (time slice actually used for the task stream - time slice actually used for the task stream) may be further used to represent a remaining time slice of the first task stream. If a time slice allocated to a task stream is used up, a remaining time slice of the task stream may be 0 or a negative value.

Example 2: In an example in which the first priority includes three sub-priorities (a first sub-priority, a second sub-priority, and a third sub-priority), the accelerator first schedules an AI task of a first task stream with the first sub-priority in the plurality of first task streams; when a time slice allocated to the first task stream with the first sub-priority is used up, or the AI task of the first task stream with the first sub-priority is completely scheduled, schedules an AI task of a first task stream with the second sub-priority; and when a time slice allocated to the first task stream with the second sub-priority is used up, or the AI task of the first task stream with the second sub-priority is completely scheduled, schedules an AI task of a first task stream with the third sub-priority. When a time slice allocated to the first task stream with the third sub-priority is used up, or the AI task of the first task stream with the third sub-priority is completely scheduled, one round of scheduling is completed. Certainly, during specific implementation, the foregoing scheduling sequence may alternatively be exchanged. This is not limited in this application.

It should be understood that the foregoing two examples are merely examples but not specific limitations. In actual application, a quantity of sub-priorities included in the first priority is not limited to two or three.

Further, during specific implementation, if at least two first task streams have a same sub-priority, for example, sub-priorities of at least two first task streams are the first sub-priority, a time slice allocated to each of the at least two first task streams is determined based on the first sub-priority, that is, time slices allocated to all first task streams in the at least two first task streams have a same length. When scheduling the at least two first task streams, the accelerator may simultaneously schedule all the first task streams in the at least two first task streams (for example, if the accelerator has a plurality of arithmetic logic units, AI tasks in different first task streams in the at least two first task streams may be scheduled to different arithmetic logic units in parallel), or may sequentially schedule different first task streams in the at least two first task streams. This is not limited in this application. However, regardless of which manner is used, a first task stream with another sub-priority can be scheduled only after a time slice allocated to each of the at least two first task streams corresponding to the first sub-priority is used up or an AI task is completely scheduled.

It can be learned from the foregoing that, in the technical solution provided in embodiments of this application, different first task streams in the plurality of first task streams corresponding to the first priority may have different sub-priorities. The accelerator schedules each of the plurality of first task streams through round robin, so that first task streams with different sub-priorities may occupy the accelerator in turn. Because a processing speed of the accelerator is high, it can be superficially considered that first task streams with different sub-priorities are scheduled in parallel, provided that an interval between time slices is appropriate. This achieves technical effect of parallel scheduling of task streams with different sub-priorities in the first priority (or referred to as a common priority). In addition, because a longer time slice is allocated to a task stream with a higher sub-priority, it can be further ensured that the task stream with the higher sub-priority occupies more running time of the accelerator, thereby implementing priority-based control. In addition, the foregoing scheduling mechanism is simple, has a small computation amount, and is applicable to hardware-based implementation, for example, is applicable to an accelerator like an NPU.

Optionally, the accelerator may sequentially schedule, starting from a first task stream with a highest sub-priority, the AI tasks of all the first task streams in the plurality of first task streams through round robin.

For example, the first priority includes a first sub-priority and a second sub-priority, and the second sub-priority is higher than the first sub-priority. The accelerator first schedules an AI task of a first task stream with the first sub-priority in the plurality of first task streams; and when a time slice allocated to the first task stream with the first sub-priority is used up, or the AI task of the first task stream with the first sub-priority is completely scheduled, schedules an AI task of a first task stream with the second sub-priority. When a time slice allocated to the first task stream with the second sub-priority is used up, or the AI task of the first task stream with the second sub-priority is completely scheduled, one round of scheduling is completed.

For example, the first priority includes a first sub-priority, a second sub-priority, and a third sub-priority, the third sub-priority is higher than the second sub-priority, and the second sub-priority is higher than the first sub-priority. The accelerator first schedules an AI task of a first task stream with the first sub-priority in the plurality of first task streams; when a time slice allocated to the first task stream with the first sub-priority is used up, or the AI task of the first task stream with the first sub-priority is completely scheduled, schedules an AI task of a first task stream with the second sub-priority; and when a time slice allocated to the first task stream with the second sub-priority is used up, or the AI task of the first task stream with the second sub-priority is completely scheduled, schedules an AI task of a first task stream with the third sub-priority. When a time slice allocated to the first task stream with the third sub-priority is used up, or the AI task of the first task stream with the third sub-priority is completely scheduled, one round of scheduling is completed. Certainly, during specific implementation, the foregoing scheduling sequence may alternatively be exchanged. This is not limited in this application. The third sub-priority is higher than the second sub-priority, and the second sub-priority is higher than the first sub-priority.

It should be understood that the foregoing two examples are merely examples but not specific limitations. In actual application, a quantity of sub-priorities is not limited to two or three.

In this implementation, when task streams corresponding to all sub-priorities in the first priority are scheduled in parallel, it can be ensured as much as possible that a task stream with a higher sub-priority is first scheduled.

Optionally, when scheduling each task stream, the accelerator may schedule a single AI task to one arithmetic logic unit for running, or may schedule a single AI task to a plurality of arithmetic logic units for running. This is not limited in this application.

In a possible implementation, that the accelerator schedules a single AI task to a plurality of arithmetic logic units for running specifically includes: The accelerator divides the single AI task into a plurality of units (blocks) (the unit may also be referred to as a block or a data block), and schedule the plurality of blocks to the plurality of arithmetic logic units for running, where one arithmetic logic unit executes one block.

During specific implementation, each AI task may carry indication information. The indication information is used to describe a quantity of blocks into which the AI task can be divided, that is, used to indicate a quantity of blocks that the AI task needs to be divided into when the accelerator schedules the AI task (or a quantity of arithmetic logic units to which the AI task needs to be scheduled for running). For example, N may be used to represent the quantity of blocks into which the AI task can be divided, and N is a positive integer. Specially, N=1 indicates that one AI task is one block.

For example, an AI task of a first task stream with the first sub-priority in the plurality of first task streams is scheduled. In this case, a scheduling process may include: determining, based on first indication information carried by a first AI task in the first task stream, a quantity N of blocks corresponding to the first AI task, where N is a positive integer; and if N=1, scheduling the first AI task to one arithmetic logic unit for processing; or if N>1, dividing the first AI task into N blocks, and scheduling the N blocks obtained through division to N different arithmetic logic units for processing. The first AI task may be the 1^{st} AI task in the first task stream.

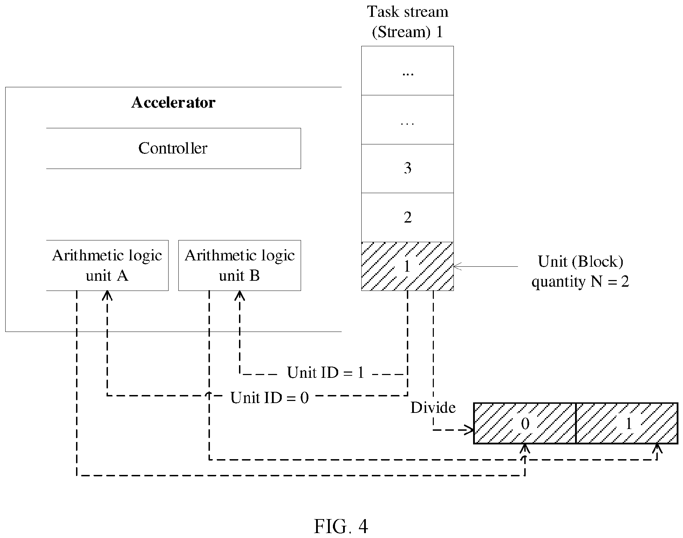

In a specific example, FIG. 4 is a schematic diagram of a relationship between an AI task and a block. As shown in FIG. 4, a task stream (Stream) 1 is scheduled in the accelerator in a serial manner, and information about a first task (that is, a task whose identifier is 1) of the task stream (Stream) 1 includes indication information indicating that a quantity of blocks is 2. In this case, when scheduling the task 1, the controller divides the task 1 into two blocks, and configures identifiers (ID) of the blocks obtained through division to corresponding arithmetic logic units, where block ID=0 is allocated to an arithmetic logic unit A, and block ID=1 is allocated to an arithmetic logic unit B. After receiving a block ID, each arithmetic logic unit finds a corresponding block for execution. To be specific, the arithmetic logic unit A executes a block 0, and the arithmetic logic unit B executes a block 1.

In this implementation, a single AI task can be scheduled to a plurality of arithmetic logic units for running, thereby improving a parallelism degree of AI task scheduling.

Optionally, when an AI task of at least one first-type task stream in the plurality of first task streams is not completely scheduled, and a time slice that has been used for each first task stream in the at least one first-type task stream is greater than or equal to a time slice allocated to the first task stream (that is, after one round of scheduling is completed), the controller of the accelerator may reallocate a time slice, and start a new round of scheduling based on the reallocated time slice. For example, a time slice is reallocated to each first task stream in the at least one first-type task stream based on a sub-priority of each first task stream in the at least one first-type task stream, and a new round of scheduling is started based on the new time slice.

In a possible case, if an AI task of each task stream in the plurality of first task streams is not completely scheduled in a previous round of scheduling, that is, the at least one first-type task stream is the plurality of first task streams, the controller needs to reallocate a time slice to each task stream in the plurality of task streams. Specifically, the controller of the accelerator reallocates a time slice to each first task stream in the plurality of first-type task streams based on a sub-priority of each first task stream in the plurality of first-type task streams. If a time slice that has been used for any first task stream in the previous round of scheduling exceeds a time slice allocated to the any first task stream, the excess of the time slice that has been used for the any first task stream in the previous round of scheduling is deducted from a time slice that should be reallocated to the any first task stream (that is, a time slice reallocated based on a sub-priority), and a time slice obtained after the deduction is used as a time slice actually allocated to the any first task stream.

In another possible case, if AI tasks of some task streams in the plurality of first task streams are completely scheduled in a previous round of scheduling (but time slices may be used up or not used up), and AI tasks of the other task streams are not completely scheduled in the previous round of scheduling (but time slices are used up), the controller of the accelerator may reallocate time slices to only the other task streams, or may reallocate time slices to all task streams in the plurality of first task streams. This is not limited in this application. Likewise, if a time slice that has been used for any first task stream in the previous round of scheduling exceeds a time slice allocated to the any first task stream, the excess of the time slice that has been used for the any first task stream in the previous round of scheduling is deducted from a time slice that should be reallocated to the any first task stream (that is, a time slice reallocated based on a sub-priority), and a time slice obtained after the deduction is used as a time slice actually allocated to the any first task stream.

For example, two rounds of scheduling are used as an example.
(1) Time slice allocation in a first round of scheduling: The controller allocates one time slice to each first task stream based on a time slice proportion of each first task stream corresponding to the first priority, where a time slice of a first task stream with a higher sub-priority is longer, and a time slice of a first task stream with a lower sub-priority is shorter.
(2) Process of the first round of scheduling: The controller sequentially schedules first task streams in descending order of sub-priorities, that is, a first task stream with a higher sub-priority is first scheduled, and a first task stream with a lower sub-priority is later scheduled. When a first task stream is scheduled, and the first task stream has a time slice, the controller schedules an AI task in the first task stream to one or more arithmetic logic units for execution. One AI task may be divided into one or more blocks for parallel running. After executing a block, each arithmetic logic unit responds to the controller (that is, sends a computing result to the controller). The controller computes, based on a time point at which the block is delivered and a time point at which a corresponding response is received, a running time period for running the block by the arithmetic logic unit, deducts the running time period from a remaining time slice of the first task stream. If there is still a remaining time slice of the first task stream, the controller continues to schedule the AI task of the first task stream to the arithmetic logic unit for execution. If the AI task of the first task stream is completely scheduled or the remaining time slice of the first task stream is 0 or a negative value, the controller schedules another first task stream having a time slice.
(3) When time slices of all the first task streams are used up, the first round of scheduling ends, and time slice allocation in a second round of scheduling starts. During time slice allocation in the second round of scheduling, if a remaining time slice of any first task stream in the previous round of scheduling (that is, the first round of scheduling) is a negative value, the excess of the time slice that has been used last time needs to be deducted (that is, time slice actually allocated to the first task stream in the second round of scheduling = time slice that should be allocated based on a priority - the excess of the time slice that has been used for the first task stream in the previous round of scheduling). Then, a process of the second round of scheduling is entered. For specific implementation, refer to the process of the first round of scheduling. Details are not described herein again.

The following gives an example with reference to a specific time slice parameter.

It is assumed that the accelerator receives four first task streams from the processor: stream1 (whose sub-priority is WRR0), stream2 (whose sub-priority is WRR1), stream3 (whose sub-priority is WRR1), and stream4 (whose sub-priority is WRR3), where a descending order of sub-priorities is WRRO>WRR1>WRR2>WRR3, and a time slice ratio of task streams corresponding to priorities is: WRRO:WRR1:WRR2:WRR3:WRR4=5:4:3:2:1. In each time slice allocation period, the controller allocates time slices 1000 µs, 800 µs, 800 µs, and 400 µs to stream1, stream2, stream3, and stream4 respectively according to the foregoing time slice ratio. stream1={task11, task12, task13, ...}, stream2={task21, task22, task23, ...}, stream3={task31, task32, task33, ...}, and stream2={task41, task42, task43, ...}. After allocating the time slices to the streams, the controller schedules the streams in sequence.

The controller schedules task11 of stream1 to the arithmetic logic unit for execution. The arithmetic logic unit executes task11 for 400 µs.

After the controller deducts 400 µs from the time slice of stream1, there are 600 µs left, and task12 continues to be scheduled.

The arithmetic logic unit executes task12 for 500 µs. After the controller deducts 500 µs from the time slice of stream1, there are 100 µs left, and task13 continues to be scheduled.

The arithmetic logic unit executes task13 for 300 µs. After the controller deducts 300 µs from the time slice of stream1, the time slice is -200 µs, and stream1 cannot be scheduled. Instead, stream2 is scheduled.

After the arithmetic logic unit completely executes task21 and task22 of stream2, a remaining time slice is -100 µs, and the controller schedules stream3.

After task31, task32, and task33 of stream3 are completely executed, a remaining time slice is -100 µs, and the controller schedules stream4.

After task41 and task42 of stream4 are completely executed, a remaining time slice is -100 µs.

At this time, the time slices of all the streams are used up. The controller reallocates a time slice to a stream and starts a new round of scheduling. Because the controller needs to deduct the excess of the time slice that has been used in the previous round, a time slice actually allocated to stream1 is 1000-200=800 µs, a time slice actually allocated to stream2 is 800-100=700 µs, a time slice actually allocated to stream3 is 800-100=700 µs, and a time slice actually allocated to stream4 is 400-100=300 µs.

In this implementation, it can be ensured that a proportion of a total time slice actually used for each first task stream in a plurality of rounds of scheduling matches a sub-priority, and accuracy of priority-based control can be further improved.

The foregoing mainly describes a method for scheduling task streams corresponding to different sub-priorities in the first priority. However, in actual application, there may be a plurality of task streams with different priorities in the accelerator at the same time. The following describes in detail a method for scheduling task streams corresponding to different priorities.

Optionally, if the controller in the accelerator receives a plurality of task streams with different priorities, the accelerator may first schedule a task stream with a higher priority, and then schedule a task stream with a lower priority after the task stream with the higher priority is completely scheduled.

For example, in S301, the controller in the accelerator receives several task streams. The several task streams include the plurality of first task streams in S301, and further include at least one second task stream. A priority type of the at least one second task stream is a second priority, the second priority includes at least one sub-priority, and the second priority is higher than the first priority. In this case, before the AI tasks of all the first task streams in the plurality of first task streams are scheduled through round robin, the controller in the accelerator needs to first schedule an AI task in the at least one second task stream; and after all AI tasks in the at least one second task stream are completely scheduled, schedule the AI tasks of all the first task streams in the plurality of first task streams through round robin.

It should be understood that the foregoing uses task streams with two priorities as an example. In actual application, there may be more priorities of task streams. This is not limited in embodiments of this application. For example, in addition to the first priority and the second priority, there may be a third priority. A task stream corresponding to the third priority is a third task stream, and the third priority is higher than the second priority. In this case, a scheduling process includes: The controller first schedules the third task stream, then schedules the second task stream after completely scheduling all AI tasks in the third task stream, and schedules the first task stream after completely scheduling all AI tasks in the second task stream.

In a possible implementation, for any priority other than the first priority, sub-priority division may not be further performed. In other words, any priority other than the first priority includes only one sub-priority. Therefore, time slices corresponding to all task streams with any other priority have a same length, and all task streams with any other priority evenly use the AI accelerator. In this case, a method for scheduling the task streams corresponding to the any other priority based on the time slices may be considered as a special example of the method for scheduling a task stream corresponding to the first priority based on a time slice.

For example, in the autonomous driving scenario shown in FIG. 1, a task stream related to a driver monitoring function corresponds to a second priority. A time slice ratio of a task stream related to a driver fatigue detection function to a task stream related to a driver distraction detection function is 1:1. For example, a time slice allocated to each task stream related to the driver fatigue detection function and each task stream related to the driver distraction detection function is 1100 µs.

For example, in the autonomous driving scenario shown in FIG. 1, a task stream related to a function like obstacle detection or lane line detection corresponds to a third priority. A time slice ratio of each task stream related to the obstacle detection function to each task stream related to the lane line detection function is 1:1. For example, all allocated time slices are 1200 µs.

It should be understood that the foregoing is merely an example rather than a limitation, and an actual priority division manner corresponding to each function in the autonomous driving system may alternatively be in another form.

In another possible implementation, for any priority (for example, the second priority or the third priority) other than the first priority, sub-priority division may be further performed. For a method for scheduling a task stream corresponding to the any other priority, refer to the method for scheduling a task stream corresponding to the first priority. The second priority is used as an example. Different second task streams in the plurality of second task streams corresponding to the second priority may have different sub-priorities, and the accelerator schedules each second task stream in the plurality of second task streams through round robin. Therefore, second task streams with different sub-priorities can occupy the accelerator in turn. For a method for allocating a time slice to a second task stream corresponding to each sub-priority in the second priority, refer to the foregoing method for allocating a time slice to a first task stream corresponding to each sub-priority in the first priority. Details are not described herein again. After completely scheduling all task streams corresponding to the second priority, the accelerator continues to schedule a task stream corresponding to the first priority.

In this implementation, a task stream with a higher priority can be scheduled by the accelerator prior to a task stream with a lower priority, so that real-time scheduling of the task stream with the higher priority can be better ensured.

Optionally, a task stream with a higher priority may preempt time for which a task stream with a lower priority occupies the arithmetic logic unit of the accelerator (briefly, "a task stream with a higher priority preempts a task stream with a lower priority" or "a higher priority preempts a lower priority"). A specific implementation includes: If the controller of the accelerator receives a task stream with a higher priority in a process of scheduling a task stream with a lower priority, the controller of the accelerator may suspend scheduling of the task stream with the lower priority, but schedule the task stream with the higher priority.

For example, in a process in which the controller of the accelerator schedules the AI tasks of all the first task streams in the plurality of first task streams through round robin, if the controller of the accelerator receives at least one second task stream, the controller of the accelerator suspends scheduling of the AI tasks in the plurality of first task streams, and starts to schedule an AI task in the at least one second task stream, where a priority type of the at least one second task stream is a second priority, the second priority includes at least one sub-priority, and the second priority is higher than the first priority.

For example, in a process in which the controller of the accelerator schedules the first task stream or the second task stream, if the controller of the accelerator receives a third task stream, the controller of the accelerator suspends scheduling of the first task stream or the second task stream, and starts to schedule the third task stream. A priority type of the third task stream is a third priority, and the third priority is higher than the second priority and the first priority.

In this implementation, a task stream with a higher priority may preempt time for which a task stream with a lower priority occupies the arithmetic logic unit of the accelerator, so that real-time scheduling of the task stream with the higher priority can be better ensured.

Optionally, an occasion at which a task stream with a higher priority preempts a task stream with a lower priority occurs at a boundary of an AI task (that is, after execution of one AI task is completed and before execution of another AI task starts) or a boundary of a block (that is, after execution of one block is completed and before execution of another block starts). If the controller of the accelerator receives a task stream with a higher priority during execution of an AI task or any block of an AI task, a preemption process is allowed to be performed only after execution of the AI task or the block ends.

For example, in a process of scheduling the AI tasks of all the first task streams in the plurality of first task streams through round robin, if at least one second task stream is received when a second AI task in the plurality of first task streams is scheduled, after the second AI task is completely executed or after a block that is in the second AI task and that has been scheduled to an arithmetic logic unit is completely executed, the controller of the accelerator suspends scheduling of the AI tasks in the plurality of first task streams, and starts to schedule an AI task in the at least one second task stream. The second AI task may be any AI task in any task stream.

Specifically, for example, a quantity of blocks of an AI task in the first task stream is 4, and the controller has delivered two blocks in the AI task to the arithmetic logic unit for execution. In this case, if the controller receives a task stream with a higher priority, the controller may switch to schedule the task stream with the higher priority after the two blocks that have been delivered are completed, and does not need to deliver the two remaining blocks.

Because AI tasks are mainly matrix operations and vector operations, are computing-intensive, and are also input/output (Input/Output, I/O)-intensive, a large amount of data needs to be read from and written into memory. For example, an accelerator can perform multiplication operations on two 16x16 FP32 matrices in one clock cycle. Data of 2x16x16x4 bytes needs to be read and data of 16x16x4 bytes needs to be written. This is much greater than a data read and write amount when a common CPU performs an FP32 multiplication operation. Therefore, an AI arithmetic logic unit has a large quantity of registers, caches (Cache), buffers (Buffer), and the like, which are used to cache computing data that needs to be read from or written to the memory. When executing an AI task, the AI accelerator reads data from the memory to the cache or buffer in parallel and updates data in the cache or buffer to the memory. All caches and buffers are exclusive to the AI task, and loading and update are controlled by the AI task. When the arithmetic logic unit executes a next AI task, the AI task controls and manages cache or buffer space.

The arithmetic logic unit of the accelerator has a large quantity of registers and caches. When the controller needs to switch AI tasks, if the arithmetic logic unit is suspended like a switching program process of a CPU, various registers and caches in the arithmetic logic unit are backed up, and then another AI task (if the AI task has been interrupted previously, register and cache data that is backed up before restoration of the task is included) is switched to the arithmetic logic unit for execution, storage overheads and performance overheads of backup and restoration of registers and caches are excessively high.

However, in this implementation, because execution time of most AI tasks is very short (for example, for an AI task related to autonomous driving, running time of an AI model is at a millisecond (ms) level, and the AI model generally includes dozens or hundreds of AI tasks, and therefore in a normal case, execution time of each AI task is far less than 1 ms), an occasion at which a high-priority task stream preempts a low-priority task stream occurs at a boundary of an AI task or a boundary of block, so that the high-priority task stream can preempt the low-priority task stream without interrupting the AI task, and a register, a cache, and the like do not need to be backed up and restored. In this way, storage overheads and performance overheads of the accelerator can be reduced.

Optionally, in a scheduling period (that is, during a round of scheduling), if the controller receives a new task stream, the controller may allocate a time slice to the new task stream. A time slice that should be allocated to the new task stream is the same as a time slice that should be allocated to a task stream whose priority is the same as that of the new task stream in the current scheduling period (that is, the excess of a time slice that has been used in a previous round and that needs to be deducted is not considered). For example, the foregoing scheduling of stream1 (whose sub-priority is WRR0), stream2 (whose sub-priority is WRR1), stream3 (whose sub-priority is WRR1), and stream4 (whose sub-priority is WRR3) is still used, and time slices allocated by the controller to stream1, stream2, stream3, and stream4 in a first scheduling period are 1000 µs, 800 µs, 800 µs, and 400 µs respectively. If the controller receives a new task stream stream5 (whose sub-priority is WRR1) in the first scheduling period, a time slice allocated to the new task stream stream5 should be the same as that allocated to stream2 (whose sub-priority is WRR1), that is, a time slice allocated to the task stream stream5 is 800 µs.

Optionally, if a scheduled task stream is blocked (for example, a scheduled AI model has a plurality of task streams, and one task stream can be scheduled only after another task stream is scheduled), the controller may wait until the blocked task stream meets an execution condition (for example, after another task stream stream is scheduled), and then execute the task stream. If the task stream does not meet the execution condition in one scheduling period, after a time slice of another task stream is used up or an AI task is completely scheduled, time slice allocation in a next round starts, and a remaining time slice of the task stream in the scheduling period is not added to the time slice allocation in the next round. If a remaining time slice of a blocked task stream in each scheduling period is added to time slice allocation in a next round, a large quantity of time slices are accumulated for the blocked task stream. When the blocked task stream is scheduled, execution of another task stream is severely delayed.

In this implementation, real-time scheduling of the AI task can be better ensured.

Optionally, if all AI tasks that have arrived at the accelerator in a task stream have been completely scheduled and executed, and no subsequent AI task arrives at the accelerator, the controller may first schedule another task stream, wait until a subsequent AI task of the task stream arrives, and then continue to execute the task stream. If no subsequent AI task of the task stream arrives in one scheduling period, after a time slice of another task stream is used up or an AI task is completely scheduled, time slice allocation in a next round starts, and a remaining time slice of the task stream in the scheduling period is not added to the time slice allocation in the next round. If a remaining time slice of the task stream in each scheduling period is added to time slice allocation in a next round, a large quantity of time slices are accumulated for the task stream. When an AI task of the task stream arrives and is scheduled, execution of another task stream is severely delayed.

In this implementation, real-time scheduling of the AI task can be better ensured.

Optionally, in a process in which the controller of the accelerator schedules a third AI task, if execution time for executing the third AI task by the accelerator exceeds preset duration, the controller may suspend execution of the third AI task by an arithmetic logic unit that is executing the third AI task, and re-perform a scheduling process, that is, re-schedule the third AI task to the arithmetic logic unit for execution. The third AI task may be any AI task in the accelerator.

For example, in an autonomous driving scenario, running time of an AI model is at an ms level, and the AI model generally includes dozens or hundreds of AI tasks. Therefore, in a normal case, execution time of most AI tasks should be far less than 1 ms. Therefore, the preset duration may be set to 1 ms, 2 ms, 3 ms, or the like (which is merely an example but not a limitation herein). Once execution time of an AI task exceeds the preset duration, it indicates that execution of the AI task is abnormal. Therefore, the controller of the accelerator may re-schedule the AI task to the arithmetic logic unit for execution, to resolve the exception, so that the arithmetic logic unit can output a correct execution result of the AI task more quickly.

When the third AI task is abnormal, if a new AI task with a higher priority (for example, the second priority) arrives at the accelerator (including that a new task stream arrives at the accelerator or a new AI task of an original task stream arrives at the accelerator), the controller may immediately schedule the newly arrived AI task to the arithmetic logic unit for execution. After the another newly arrived AI task is completely executed, the third AI task is re-executed. This ensures real-time scheduling of the another AI task.

In this implementation, the accelerator can resolve an exception in a timely manner while ensuring real-time scheduling of another AI task.

It should be understood that the foregoing embodiments provided in this application may be combined with each other to implement different technical effects.

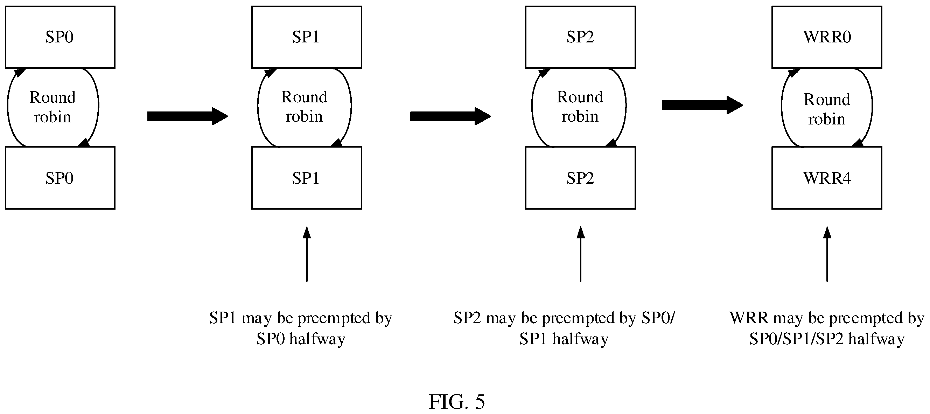

FIG. 5 is a specific example of a task scheduling method according to this application. In the example shown in FIG. 5, a controller classifies priorities of task streams into four levels: WRR (which may correspond to the first priority in the foregoing), SP0, SP1, and SP2, where a priority relationship is WRR<SP2<SP1 <SPO. WRR further includes five sub-priorities: WRR0, WRR1, WRR2, WRR3, and WRR4, where a relationship between the sub-priorities is WRRO>WRR1>WRR2>WRR3>WRR4. Correspondingly, a time slice allocation relationship is: SPO>SP1>SP2>WRRO>WRR1>WRR2>WRR3>WRR. The controller first schedules task streams corresponding to SP0 through round robin; after all task streams corresponding to SP0 are completely scheduled, schedules task streams corresponding to SP1 through round robin; after all task streams corresponding to SP0 and SP1 are completely scheduled, schedules task streams corresponding to SP2 through round robin; and after all task streams corresponding to SP0, SP1, and SP2 are completely scheduled, schedules task streams corresponding to WRR through round robin. In a scheduling process, a task stream with a higher priority may preempt a task stream with a lower priority. For example, SP1 may be preempted by SP0 halfway, SP2 may be preempted by SPO/SP1 halfway, and WRR may be preempted by SPO/SP1/SP2 halfway.

During specific implementation, an app in the processor may invoke the accelerator by using an API interface, to perform the method provided in embodiments of this application.

The following lists several possible API interfaces.
(1) CreateModelWithPriority(Model_t* pModel, int priority): is configured to create an AI model (model) object, input a priority of a model, and output the model object.
(2) CreateStreamWithPriority(Stream_t* pStream, int priority): is configured to create a task stream (stream) object, input a priority of a stream, and output a model object. If a stream is added to a model, a priority of the model covers a priority of the stream.
(3) GetModelPriority(Model_t model, int* priority): is configured to query a priority of a stream, input a stream object, and return the priority of the stream.
(4) GetStreamPriority(Stream_t Stream, int* priority): is configured to query a priority of a model, input a model object, and return the priority of the model.

It should be understood that the foregoing several API interfaces are merely examples rather than limitations.

It may be understood that, to implement functions in the foregoing embodiments, an embodiment of this application further provides a task scheduling apparatus. The apparatus includes a corresponding hardware structure and/or software module for performing the foregoing functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

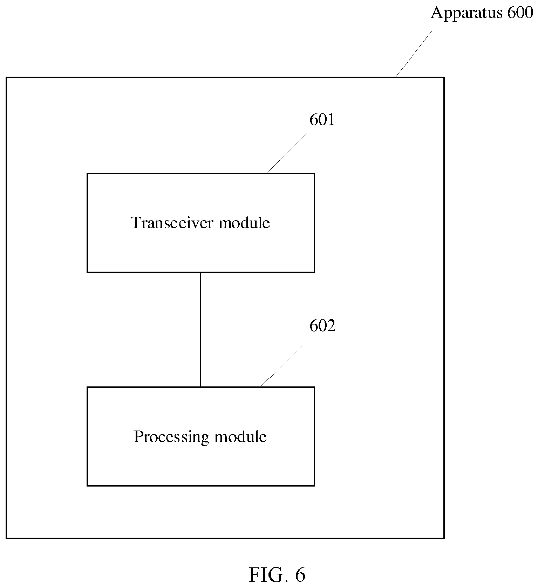

For example, as shown in FIG. 6, a task scheduling apparatus 600 includes:
a transceiver module 601, configured to receive a plurality of first task streams, where priority types of the plurality of first task streams are a first priority, and the first priority includes a first sub-priority and a second sub-priority; and
a processing module 602, configured to: allocate a time slice to each first task stream based on a sub-priority of each first task stream in the plurality of first task streams, where the first sub-priority is higher than the second sub-priority, and a time slice allocated to a first task stream corresponding to the first sub-priority is greater than a time slice allocated to a first task stream corresponding to the second sub-priority; and schedule AI tasks of all first task streams in the plurality of first task streams through round robin.

Optionally, when scheduling the AI tasks of all the first task streams in the plurality of first task streams through round robin, the processing module 602 is specifically configured to: schedule an AI task of the first task stream with the first sub-priority; and schedule an AI task of the first task stream with the second sub-priority when a time slice that has been used for the first task stream with the first sub-priority is greater than or equal to the time slice allocated to the first task stream with the first sub-priority or when the AI task of the first task stream with the first sub-priority is completely scheduled.

Optionally, when scheduling the AI task of the first task stream with the first sub-priority, the processing module 602 is specifically configured to: determine, based on first indication information carried by a first AI task in the first task stream, a quantity N of data blocks corresponding to the first AI task, where N is a positive integer; and if N=1, schedule the first AI task to one arithmetic logic unit for processing; or if N>1, divide the first AI task into N data blocks, and schedule the N data blocks obtained through division to N different arithmetic logic units for processing.

Optionally, the processing module 602 may be further configured to: when an AI task of at least one first-type task stream in the plurality of first task streams is not completely scheduled, and a time slice that has been used for each first task stream in the at least one first-type task stream is greater than or equal to a time slice allocated to the first task stream, reallocate a time slice to each first task stream in the at least one first-type task stream based on a sub-priority of each first task stream in the at least one first-type task stream, where if in the at least one first-type task stream a time slice that has been used for any first task stream in a previous round of scheduling exceeds a time slice allocated to the any first task stream, the excess of the time slice that has been used for the any first task stream in the previous round of scheduling is deducted from a time slice reallocated to the any first task stream.

Optionally, the transceiver module 601 is specifically configured to receive several task streams, where the several task streams include the plurality of first task streams and at least one second task stream, a priority type of the at least one second task stream is a second priority, and the second priority is higher than the first priority. Correspondingly, the processing module 602 may be further configured to: before the AI tasks of all the first task streams in the plurality of first task streams are scheduled through round robin, schedule an AI task in the at least one second task stream; and after all AI tasks in the at least one second task stream are completely scheduled, schedule the AI tasks of all the first task streams in the plurality of first task streams through round robin.

Optionally, the processing module 602 may be further configured to: in a process of scheduling the AI tasks of all the first task streams in the plurality of first task streams through round robin, if it is determined, when a second AI task in the plurality of first task streams is scheduled, that the transceiver module 601 receives at least one second task stream, after the second AI task is completely executed or after a data block that is in the second AI task and that has been scheduled to an arithmetic logic unit is completely executed, suspend scheduling of the AI tasks in the plurality of first task streams, and start to schedule an AI task in the at least one second task stream, where a priority type of the at least one second task stream is a second priority, and the second priority is higher than the first priority.

Optionally, the first task stream is a task stream in a first AI inference model, and the first AI inference model corresponds to an in-vehicle passenger monitoring function or an entertainment function in an autonomous driving system; and the second task stream is a task stream in a second AI inference model, and the second AI inference model corresponds to an obstacle detection function, a lane line detection function, or a driver detection function in the autonomous driving system.

It should be understood that all related content of the steps in the foregoing method embodiments may be cited in function descriptions of corresponding function modules. Details are not described herein again.

The following describes several possible product forms of the task scheduling apparatus.

Based on a same technical concept, an embodiment of this application further provides an accelerator, including a programmable logic circuit and/or program instructions. When the accelerator runs, the accelerator is configured to perform the method described in the foregoing method embodiments.

Based on a same technical concept, an embodiment of this application further provides a computer-readable storage medium. The readable storage medium is configured to store instructions. When the instructions are executed, the method described in the foregoing method embodiments is implemented.

Based on a same technical concept, an embodiment of this application further provides a computer program product including instructions. When the computer program product runs on a computer, the computer is enabled to perform the method described in the foregoing method embodiments.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to this application without departing from the protection scope of this application. Thus, this application is intended to cover these modifications and variations, provided that they fall within the scope of the claims of this application and their equivalent technologies.

## Claims

1. A task scheduling method, wherein the method comprises:
receiving a plurality of first task streams, wherein priority types of the plurality of first task streams are a first priority, and the first priority comprises a first sub-priority and a second sub-priority;
allocating a time slice to each first task stream based on a sub-priority of each first task stream in the plurality of first task streams, wherein the first sub-priority is higher than the second sub-priority, and a time slice allocated to a first task stream corresponding to the first sub-priority is greater than a time slice allocated to a first task stream corresponding to the second sub-priority; and
scheduling artificial intelligence AI tasks of all first task streams in the plurality of first task streams through round robin.

2. The method according to claim 1, wherein the scheduling AI tasks of all first task streams in the plurality of first task streams through round robin comprises:
scheduling an AI task of the first task stream with the first sub-priority; and
scheduling an AI task of the first task stream with the second sub-priority when a time slice that has been used for the first task stream with the first sub-priority is greater than or equal to the time slice allocated to the first task stream with the first sub-priority or when the AI task of the first task stream with the first sub-priority is completely scheduled.

3. The method according to claim 2, wherein the scheduling an AI task of the first task stream with the first sub-priority comprises:
determining, based on first indication information carried by a first AI task in the first task stream, a quantity N of data blocks corresponding to the first AI task, wherein N is a positive integer; and
if N=1, scheduling the first AI task to one arithmetic logic unit for processing; or
if N> 1, dividing the first AI task into N data blocks, and scheduling the N data blocks obtained through division to N different arithmetic logic units for processing.

4. The method according to claim 2 or 3, wherein the method further comprises:
when an AI task of at least one first-type task stream in the plurality of first task streams is not completely scheduled, and a time slice that has been used for each first task stream in the at least one first-type task stream is greater than or equal to a time slice allocated to the first task stream, reallocating a time slice to each first task stream in the at least one first-type task stream based on a sub-priority of each first task stream in the at least one first-type task stream, wherein
if in the at least one first-type task stream a time slice that has been used for any first task stream in a previous round of scheduling exceeds a time slice allocated to the any first task stream, the excess of the time slice that has been used for the any first task stream in the previous round of scheduling is deducted from a time slice reallocated to the any first task stream.

5. The method according to any one of claims 1 to 4, wherein
the receiving a plurality of first task streams comprises:
receiving several task streams, wherein the several task streams comprise the plurality of first task streams and at least one second task stream, a priority type of the at least one second task stream is a second priority, and the second priority is higher than the first priority; and
the method further comprises:
before the AI tasks of all the first task streams in the plurality of first task streams are scheduled through round robin, scheduling an AI task in the at least one second task stream; and after all AI tasks in the at least one second task stream are completely scheduled, scheduling the AI tasks of all the first task streams in the plurality of first task streams through round robin.

6. The method according to any one of claims 1 to 4, wherein the method further comprises:
in a process of scheduling the AI tasks of all the first task streams in the plurality of first task streams through round robin, if at least one second task stream is received when a second AI task in the plurality of first task streams is scheduled, after the second AI task is completely executed or after a data block that is in the second AI task and that has been scheduled to an arithmetic logic unit is completely executed, suspending scheduling of the AI tasks in the plurality of first task streams, and starting to schedule an AI task in the at least one second task stream, wherein
a priority type of the at least one second task stream is a second priority, and the second priority is higher than the first priority.

7. The method according to claim 5 or 6, wherein the first task stream is a task stream in a first AI inference model, and the first AI inference model corresponds to an in-vehicle passenger monitoring function or an entertainment function in an autonomous driving system; and
the second task stream is a task stream in a second AI inference model, and the second AI inference model corresponds to an obstacle detection function, a lane line detection function, or a driver detection function in the autonomous driving system.

8. A task scheduling apparatus, wherein the apparatus comprises:
a transceiver module, configured to receive a plurality of first task streams, wherein priority types of the plurality of first task streams are a first priority, and the first priority comprises a first sub-priority and a second sub-priority; and
a processing module, configured to: allocate a time slice to each first task stream based on a sub-priority of each first task stream in the plurality of first task streams, wherein the first sub-priority is higher than the second sub-priority, and a time slice allocated to a first task stream corresponding to the first sub-priority is greater than a time slice allocated to a first task stream corresponding to the second sub-priority; and schedule AI tasks of all first task streams in the plurality of first task streams through round robin.

9. The apparatus according to claim 8, wherein when scheduling the AI tasks of all the first task streams in the plurality of first task streams through round robin, the processing module is specifically configured to:
schedule an AI task of the first task stream with the first sub-priority; and
schedule an AI task of the first task stream with the second sub-priority when a time slice that has been used for the first task stream with the first sub-priority is greater than or equal to the time slice allocated to the first task stream with the first sub-priority or when the AI task of the first task stream with the first sub-priority is completely scheduled.

10. The apparatus according to claim 9, wherein when scheduling the AI task of the first task stream with the first sub-priority, the processing module is specifically configured to:
determine, based on first indication information carried by a first AI task in the first task stream, a quantity N of data blocks corresponding to the first AI task, wherein N is a positive integer; and
if N=1, schedule the first AI task to one arithmetic logic unit for processing; or
if N>1, divide the first AI task into N data blocks, and schedule the N data blocks obtained through division to N different arithmetic logic units for processing.

11. The apparatus according to claim 9 or 10, wherein the processing module is further configured to:
when an AI task of at least one first-type task stream in the plurality of first task streams is not completely scheduled, and a time slice that has been used for each first task stream in the at least one first-type task stream is greater than or equal to a time slice allocated to the first task stream, reallocate a time slice to each first task stream in the at least one first-type task stream based on a sub-priority of each first task stream in the at least one first-type task stream, wherein
if in the at least one first-type task stream a time slice that has been used for any first task stream in a previous round of scheduling exceeds a time slice allocated to the any first task stream, the excess of the time slice that has been used for the any first task stream in the previous round of scheduling is deducted from a time slice reallocated to the any first task stream.

12. The apparatus according to any one of claims 8 to 11, wherein
the transceiver module is specifically configured to receive several task streams, wherein the several task streams comprise the plurality of first task streams and at least one second task stream, a priority type of the at least one second task stream is a second priority, and the second priority is higher than the first priority; and
the processing module is further configured to:
before the AI tasks of all the first task streams in the plurality of first task streams are scheduled through round robin, schedule an AI task in the at least one second task stream; and after all AI tasks in the at least one second task stream are completely scheduled, schedule the AI tasks of all the first task streams in the plurality of first task streams through round robin.

13. The apparatus according to any one of claims 8 to 11, wherein the processing module is further configured to:
in a process of scheduling the AI tasks of all the first task streams in the plurality of first task streams through round robin, if it is determined, when a second AI task in the plurality of first task streams is scheduled, that the transceiver module receives at least one second task stream, after the second AI task is completely executed or after a data block that is in the second AI task and that has been scheduled to an arithmetic logic unit is completely executed, suspend scheduling of the AI tasks in the plurality of first task streams, and start to schedule an AI task in the at least one second task stream, wherein
a priority type of the at least one second task stream is a second priority, and the second priority is higher than the first priority.

14. The apparatus according to claim 12 or 13, wherein the first task stream is a task stream in a first AI inference model, and the first AI inference model corresponds to an in-vehicle passenger monitoring function or an entertainment function in an autonomous driving system; and
the second task stream is a task stream in a second AI inference model, and the second AI inference model corresponds to an obstacle detection function, a lane line detection function, or a driver detection function in the autonomous driving system.

15. An accelerator, comprising a programmable logic circuit and/or program instructions, wherein when the accelerator runs, the accelerator is configured to implement the method according to any one of claims 1 to 7.

16. A computer-readable storage medium, wherein the readable storage medium is configured to store instructions, and when the instructions are executed, the method according to any one of claims 1 to 7 is implemented.

17. A computer program product comprising instructions, wherein when the computer program product runs on a computer, the computer is enabled to perform the method according to any one of claims 1 to 7.
